# EUROPEAN PATENT SPECIFICATION

(11) **EP 0 383 185 B1**
(45) Date of publication and mention of the grant of the patent: **24.02.1993**
(21) Application number: 90102436.4
(22) Date of filing: 07.02.1990
(51) Int. Cl.: F16K 1/22, F02C 9/20, F23L 13/08

(54) **Louver dampers for use in gas turbines exhaust systems and having blades protected against becoming warped**
Mit Lamellen versehene Jalousieklappe für Gasturbinenaustrittssysteme, welche gegen Verformungen geschützt sind
Registre à papillon équipé de feuillets pour systèmes de sortie de turbines de gaz protégées contre la déformation

(30) Priority: 13.02.1989 US 309257
(43) Date of publication of application: 22.08.1990
(73) Proprietor: BACHMANN CORPORATE SERVICES, INC., Lewiston, ME 04240 (US)
(72) Inventor: Bachmann, Lothar, Auburn, Maine 04210 (US)
(74) Representative: Heusler, Wolfgang, Dipl.-Ing.

(56) References cited:
- WO-A-88/09458
- GB-A- 1 598 427
- US-A- 3 698 429
- US-A- 4 077 432
- US-A- 4 823 836

## Description

### Technical Field to Which the Invention Relates

The invention relates to exhaust systems for gas turbines. When a gas turbine is started, the volume, temperature and velocity of its exhaust gases very quickly reach their maximums. The exhaust systems of gas turbines are adapted to utilize heat which would otherwise be wasted to operate cogenerating systems such as heat recovery steam boilers. Such systems typically have a bypass into which the hot gas stream is diverted when, for one example, the cogenerating system is to be placed temporarily out of service. Louver dampers or hinged blade diverters are typically employed for this purpose.

### Background Art

One example of a hinged diverter blade operable to shift the flow from either system to the other is disclosed in U.S. Patent 4,821,507, issued April 19, 1989. Alternatively, one or more louver dampers or a combination of louver and guillotine dampers may be positioned in the bypass and one or more louver dampers or a combination of louver and guillotine dampers may be incorporated in the exhaust system between the bypass and the steam boiler.

Because of the sudden build-up of the temperature in gas turbine exhaust systems, it is necessary for diverter blades or louver dampers to be able to accommodate thermal expansion forces. In U.S. Patent 4,821,507, a diverter blade is disclosed having that capacity and in U.S. Patent 4,823,836, issued April 25, 1989, leaf spring seals are provided which are constructed and arranged in a manner accommodative of thermal expansion forces in conjunction with both diverter blades and louver dampers.

In the manufacture of louver dampers, the weight of the louver blades is minimized by utilizing relatively thin metal stock. Such dampers are for instance known from US-A- 3698429 and correspond to the first part of claim 1.

### Summary of the Invention

The object of the invention is to provide louver dampers having blades, which are relatively light-weighted and which are suitably reinforced and ported to enable interior surfaces, and surfaces upstream when the damper is closed, to be heated evenly in order to avoid blade distortions with temperature change.

In accordance with the invention there is provided a louver damper for incorporation in the exhaust system of a gas turbine, the damper comprising framework 10,13 defining a rectangular flow path opening there through, flat rectangular blades 17 and rotatable blade actuating means 18,19,22,23,24 mounted in the framework for rotating the blades between positions opening the flow path and positions closing the flow path, the blades 17 having a working clearance with respect to the framework 13 and to each other, characterized by a reinforcement 36 for each blade 17 on the face thereof which is upstream in the closed position of the blades, each reinforcement 36 including a rectangular central portion 37 spaced from the face and side portions 38 connected to the face adjacent the margins thereof, a free space being thus defined between the reinforcement 36 and the blade 17, each of the side portions 38 having a plurality of holes 40 spaced lengthwise thereof with the series of holes of one side portion 38 offset with respect to the series of holes 40 of the other side portion 38, whereby hot exhaust gases circulate through the holes 40 of said reinforcement 36 and through said free space with turbulence such that the entire upstream face is simultaneously and uniformly so heated as to avoid blade distortion.

One form of the louver damper of the invention is further characterized in that the blade actuating means comprises two shafts 18,19 for each blade 17, each shaft having first and second ends, the first ends being welded to the opposite ends of the blades 17 in alignment with the lengthwise centerline thereof, the blades 17 being within the flow path one above the other, the second shaft ends being rotatably supported by the framework with the axes of the blades parallel and in the same vertical plane, and still further characterized in that the first ends of the shafts 18,19 of each blade 17 are welded thereto close to the ends thereof and each reinforcement 36 includes end gussets 39 normal to the said face and welded thereto and to the first shaft end.

The invention is further characterized in that the framework 10,13 may include a supporting frame 10, an inner frame 13, insulation 12 between the frames, a connection 14,14A,15,16 between the frames and within the insulation, the connection being of a type enabling expansion forces to be accommodated, the inner frame 13 being provided with seal seats 32,33 extending about and into the flow path with working clearances with respect to the blades 17, seals 25 extending about the margin of the blades 17 for engagement with said seats 32,33, one of the margins of the blades which are proximate when the blades are in their closed position being provided with a lengthwise seal 25 for engagement with the other of the last named margins, the seals being of a type enabling expansion forces to be accommodated without blade distortion.

Still further objects, features and advantages of the invention will become apparent from the following detailed description of a presently preferred embodiment of the same taken in conjunction with the accompanying drawings.

### Brief Description of the Drawings

In the accompanying drawings, which illustrate a preferred embodiment of a louver damper in accordance with the invention,
Fig. 1 is an elevation of the upstream side of the damper with the louver blades in their closed or operative position;
Fig. 2 is a view of the right hand end of the same as seen in Fig. 1;
Fig. 3 is a section on an increased scale taken approximately on line 3 - 3 of Fig. 1;
Fig. 4 is a fragmentary section, on a further increased scale, taken approximately on line 4 - 4 of Fig. 1;
Fig. 5 is a fragmentary cross-sectional view illustrating the leaf spring seals located at a corner of one of the louver blades; and
Fig. 6 is a fragmentary view of a portion of one louver blade with parts broken away illustrating the leaf spring seal arrangement.

### Detailed Description of Preferred Embodiment

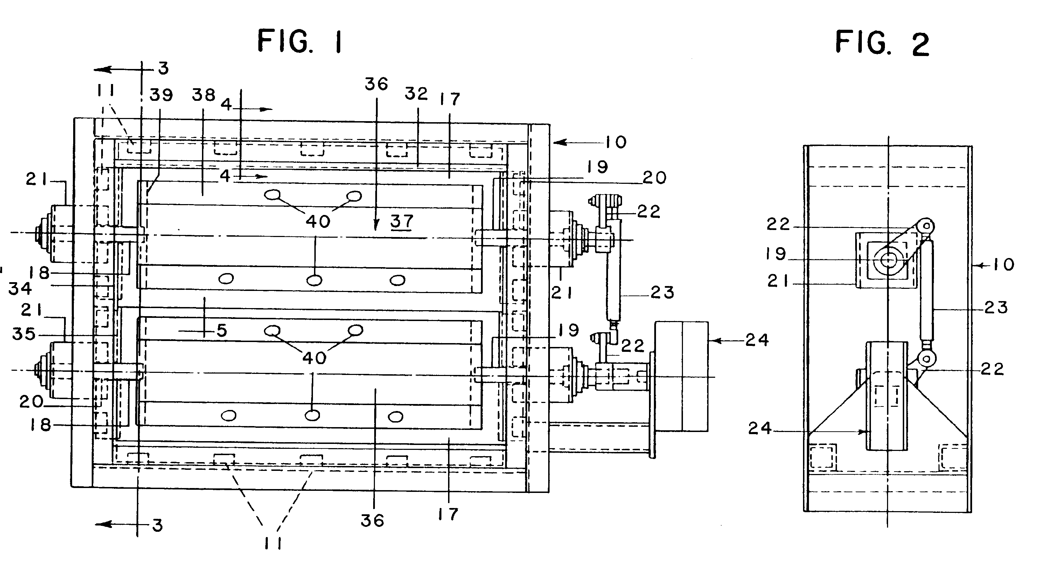

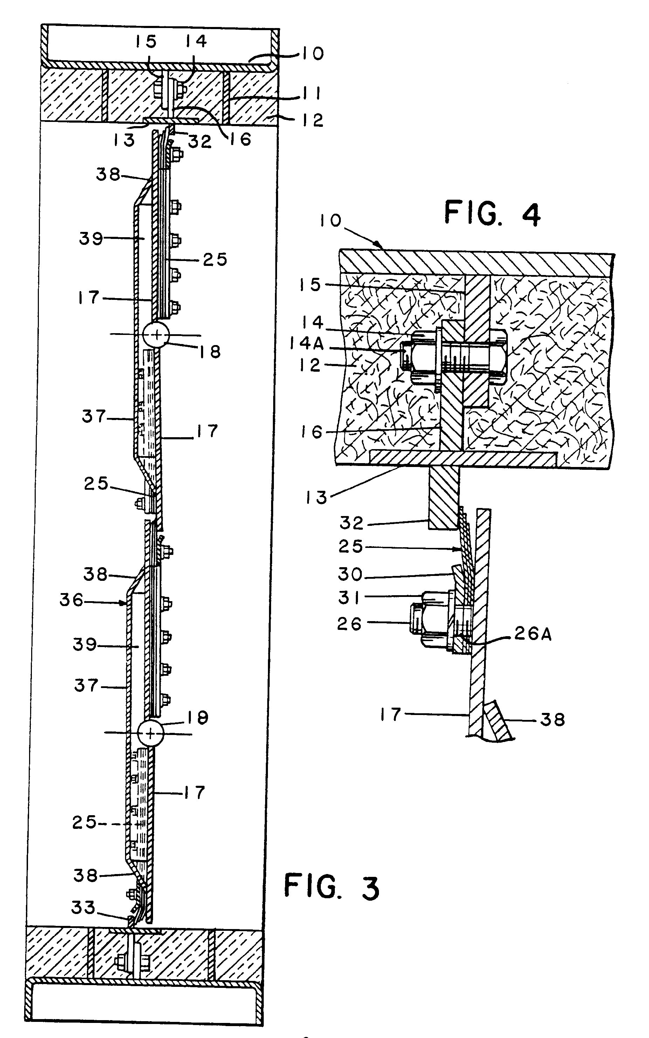

The louver damper illustrated by the drawings includes a frame, generally indicated at 10 (Fig. 1) which, like the adjacent duct sections, is rectangular and formed of appropriate lengths of outwardly opening channel stock, having on its inner surfaces anchors 11, (Fig. 3), for castable refractory 12 rendering the frame 10 a cold frame. The frame 10 differs from those of the adjacent duct sections in that its top, bottom and side walls (Fig. 4) have corresponding walls of an inner frame 13 joined thereto through the refractory 12 by a series of nut and bolt connections 14,14A. These nuts and bolts interconnect a series of mounts 15 fixed on the inner surfaces of the cold frame 10 with supports 16 on the proximate surfaces of the inner frame 13. The holes for the bolts 14A in the supports 16 are oversized to enable thermal expansion forces to be accommodated.

The louver damper has two flat, rectangular blades 17 of substantial length (Fig. 3). Each blade 17 has aligned shafts 18,19 centrally of its ends which extend through sleeves 20 (Fig. 1) in the refactory 12. The sleeves are welded to the frames 10,13. The shafts 18,19, and the two blades 17, when closed, lie in essentially the same vertical plane, the shafts being supported by bearing assemblies 21 on the outside of the frame 10 which also seal the sleeves 20. The shafts 18 are stub shafts while the shafts 19 have arms 22 interconnected by a link 23 (Fig. 2). One of the shafts 19 is coupled to an actuator 24 which may be of any type operable through arms 22 and link 23 to turn the two blades 17 in unison and to the same extent between closed (operative) and open (inoperative) positions.

The blades 17 are so dimensioned that when mounted in the frame 13, there is a working clearance between the parts and their opposite side edges with respect to the corresponding walls of the frame 13. The blades 17 are also so dimensioned that, when in their operative position in which they lie substantially in the previously referred to plane, there is a working clearance between their proximate side edges.

In order to prevent hot gas from flowing through the working clearances, leaf spring seal assemblies, generally indicated at 25 (Fig. 4), are secured to the margins of the blades 17. The assemblies are shown as in accordance with U.S. Patent 4,823,836, issued April 25, 1989.

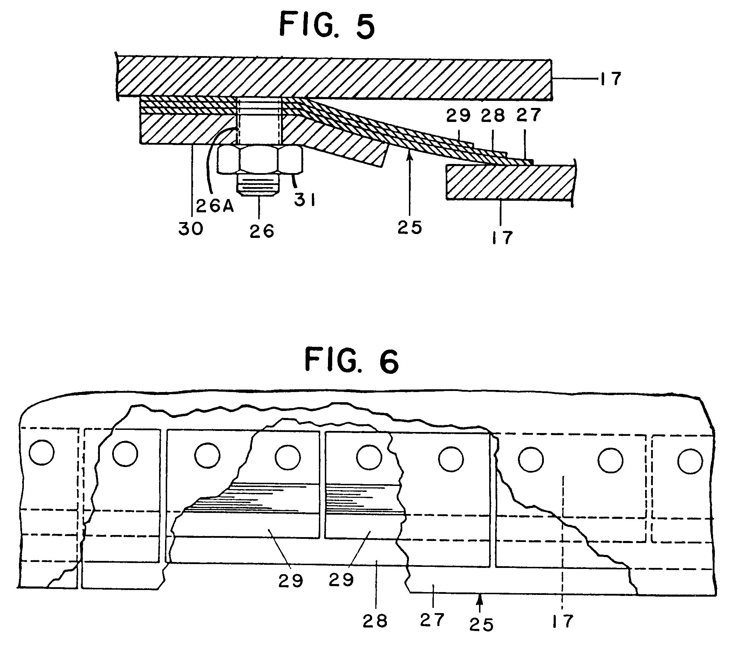

In Fig. 5 the assemblies 25 are shown as connected to one of the proximate side edges of the blades 17 and in sealing engagement with the proximate side edges of the other. The side edge of the blade provided with the leaf spring seal assembly has a lengthwise series of studs extending through oversized holes 26A in one end of each of the leaf springs 27,28,29 and through an oversized hole in the clamping bar 30. Nuts 31 threaded on the studs 26 lock the assembly in place. The leaf springs 28,29 are progressively narrower than the leaf spring 27 (Figs. 5 and 6). The other or free ends of the leaf springs are bent to the same extent along a common line and are held tensioned by the free end of the clamping bar 30 which is inclined in the same direction but to a lesser extent than the leaf springs. While the oversized holes 26A through which the studs 26 extend enable thermal expansion forces to be accommodated, in practice, the sealing means at the blade margins is effected (Fig. 6) by a lengthwise series of assemblies 25. These assemblies are positioned with a gap between the clamping bars of two assemblies and with expansion gaps between corresponding leaf springs of the assemblies. The leaf springs so disposed and arranged that gas flow through the gap between any two corresponding leaf springs is blocked by at least one other leaf spring.

In order for the leaf spring seals to be effective when the blades are in their closed or operative positions, the inner surfaces of the frame 13 are provided with seats 32,33. The U-shaped seat 32 extends along the top side of the frame 13 downwardly along the sides thereof with a working clearance between their ends and the shafts 18 of the upper blade 17. A like seat 33 extends along the bottom side of the frame 13 with a working clearance between its ends and the shaft 19 of the lower blade 17. The seats 32,33 are identical except that they are on opposite sides of the vertical plane inclusive of the axes of the shafts 18,19. In the embodiment of the invention illustrated by the drawings, the blades 17 turn from their closed positions, as seen in Fig. 3, in a counterclockwise direction to their open position.

For proper sealing to occur, the seats 32,33 are offset from the common plane (Fig. 3). Leaf spring seal assemblies 25 extend along the margins of the blades 17 for engagement with the appropriate one of the seats 32,33 and to permit the blades to turn between their open and closed positions.

The frame 13 is also provided with seats 34,35 (Fig. 1) for leaf spring seal assemblies 25 mounted on the proximate end margins of the blades 17. The seats 34,35 are located on opposite sides of the vertical plane inclusive of the shaft axes for engagement by the appropriate seal assembly when the blades are in their operative closed position.

Referring to Figs. 1 and 3, each blade 17 has a reinforcement 36 on its face which is upstream when the damper is closed. Each reinforcement 36 is shown as an assembly having a flat central section 37 and flat side sections 38. The latter sections are inclined towards and welded to the blade close to the opposite margins thereof so as to space the central section from the underlying blade area for the purpose hereinafter indicated. The reinforcing assembly is completed by end gussets 39.

Such an assembly, while necessary to avoid the use of thicker blades, nevertheless shields the major portion of its blade from the hot exhaust stream, thereby presenting a problem of uneven heating of the blades.

To prevent warpage when the blades are subjected to the sudden blast of hot gas when the turbine is started, each side section is provided with a series of holes 40 (Fig. 1) with the holes in one side section 38 offset with respect to those in the other side section. With this construction, the hot exhaust gas not only impinges against portions of each blade surrounding its reinforcement but also flows through each reinforcement with turbulence. Thereby the heating of all surfaces of the reinforcement and underlying portions of the blades is ensured and undesirable blade distortion avoided.

As already indicated, any such distortion would render ineffective proper sealing of the clearance between the blades and correspondingly adversely affect the operation of the damper.

While there has herein been disclosed and described a presently preferred embodiment of the invention, it will nevertheless be understood that the same is by way of illustration and not by way of limitation and the scope of the invention is limited only by the proper interpretation of the appended claims.

## Claims

1. A louver damper for incorporation in the exhaust system of a gas turbine, said damper comprising framework (10,13) defining a rectangular flow path opening therethrough, flat rectangular blades (17) and rotatable blade actuating means (18,19,22,23,24) mounted in said framework for rotating said blades between positions opening said flow path and positions closing said flow path, said blades (17) having a working clearance with respect to the framework (13) and to each other, characterized by
a reinforcement (36) for each blade (17) on the face thereof which is upstream in the closed position of the blades, each reinforcement (36) including a rectangular central portion (37) spaced from said face and side portions (38) connected to said face adjacent the margins thereof, a free space being thus defined between the reinforcement (36) and the blade (17), each of said side portions (38) having a plurality of holes (40) spaced lengthwise thereof with the series of holes of one side portion (38) offset with respect to the series of holes (40) on the other side portion (38) whereby hot exhaust gases circulate through the holes (40) of said reinforcement (36) and through said free space with turbulence such that the entire upstream face is simultaneously and uniformly so heated as to avoid blade distortion.

2. The louver damper of claim 1 further characterized in that said blade actuating means comprises two shafts (18,19) for each blade (17), each shaft having first and second ends, the first ends welded to the opposite ends of the blades (17) in alignment with the lengthwise centerline thereof, the blades (17) being within the flow path one above the other, the second shaft ends rotatably supported by the framework with the axes of the blades parallel and in the same vertical plane, and still further characterized in that the first ends of the shafts (18,19) of each blade (17) are welded thereto close to the ends thereof and each reinforcement (36) includes end gussets (39) normal to said face and welded thereto and to the first shaft ends.

3. The louver damper of claim 1 further characterized in that the framework (10,13) includes a supporting frame (10), an inner frame (13), insulation (12) between the frames, a connection (14,14A,15,16) between the frames and within the insulation, said connection being of a type enabling expansion forces to be accommodated, said inner frame (13) provided with seal seats (32,33) extending about and into the flow path with working clearances with respect to the blades (17), seals (25) extending about the margin of the blades (17) for engagement with said seats (32,33), one of the margins of the blades which are proximate when the blades are in their closed position being provided with a lengthwise seal (25) for engagement with the other of the last named margins, the seals being of a type enabling expansion forces to be accommodated without blade distortion.

## Patentansprüche

1. Jalousieklappe zum Einbau in das Auslaßsystem einer Gasturbine, wobei die Klappe einen Rahmen (10,13), der einen sich durch diesen öffnenden rechteckigen Strömungspfad begrenzt, flache, rechteckige Lamellen (17) und eine drehbare Lamellenbetätigungseinrichtung(18,19,22,23,24), die in dem Rahmen zum Drehen der Lamellen zwischen den Strömungspfad öffnenden Stellungen und den Strömungspfad schließenden Stellungen angeordnet ist, umfaßt, wobei die Lamellen (17) einen Arbeitsspielraum bezüglich des Rahmens (13) und zueinander aufweisen, **gekennzeichnet durch**
eine Verstärkung (36) für jede Lamelle (17) auf deren Fläche, welche in der geschlossenen Stellung der Lamellen stromaufwärts liegt, wobei jede Verstärkung (36) einen von der besagten Fläche beabstandeten rechteckigen zentralen Bereich (37) und mit der Fläche nahe deren Rändern verbundene Seitenbereiche (38) umfaßt, so daß ein freier Zwischenraum zwischen der Verstärkung (36) und der Lamelle (17) definiert wird, wobei jeder der Seitenbereiche (38) eine Anzahl von in dessen Längsrichtung beabstandeten Löchern (40) aufweist, wobei die Reihe von Löchern des einen Seitenbereichs (38) bezüglich der Reihe von Löchern (40) des anderen Seitenbereichs (38) versetzt ist, wodurch heiße Auspuffgase durch die Löcher (40) der Verstärkung (36) und durch den freien Zwischenraum mit Turbulenz zirkulieren, so daß die gesamte stromaufwärtige Fläche gleichzeitig und einheitlich so erwärmt wird, daß eine Verwerfung der Lamelle vermieden wird.

2. Jalousieklappe nach Anspruch 1, weiterhin dadurch gekennzeichnet, daß die Lamellenbetätigungseimrichtung zwei Wellen (18,19) für jede Lamelle (17) umfaßt, wobei jede Welle erste und zweite Emden aufweist, die ersten Enden an die entgegengesetzten Enden der Lamellen (17) in Ausrichtung mit deren längsweiser Mittellinie angeschweißt sind, die Lamellen (17) sich eine über der anderen in dem Strömungspfad befinden, die zweiten Wellenenden von dem Rahmen mit dem Achsen der Lamellen parallel und in derselben vertikalem Ebene drehbar gehaltert sind, und außerdem dadurch gekennzeichnet, daß die ersten Enden der Wellen (18,19) jeder Lamelle (17) nahe deren Enden daran angeschweißt sind und jede Verstärkung (36) eine Endversteifung (39) senkrecht zu der besagten Fläche und an diese und an die ersten Wellenenden angeschweißt enthält.

3. Jalousieklappe nach Anspruch 1, weiterhin dadurch gekennzeichnet, daß der Rahmen (10,13) einen Stützrahmen (10), einen inneren Rahmen (13), eine Isolierung (12) zwischen dem Rahmen, sowie eine Verbindung (14,14A,15,16) zwischen dem Rahmen und innerhalb der Isolierung enthält, wobei die Verbindung von einer Art ist, die eine Aufnahme von Ausdehnungskräften gestattet, der innere Rahmen (13) mit Dichtungssitzen (32,33) versehen ist, die sich um und in den Strömungspfad mit Arbeitsspielräumen bezüglich der Lamellen (17) erstrecken, Dichtungen (25) sich um den Rand der Lamellen (17) erstrecken für eine Anlage an die Sitze (32,33), einer der Ränder der Lamellen, welche benachbart sind, wenn sich die Lamellen in ihrer geschlossenen Stellung befinden, mit einer längsweisen Dichtung (25) zur Anlage an dem anderen der zuletzt genannten Ränder versehen ist, wobei die Dichtungen von einer Art sind, die die Aufnahme von Dehnungskräften ohne Verwerfung der Lamelle gestatten.

## Revendications

1. Un registre à lames pivotantes, destiné à être incorporé dans le système d'échappement d'une turbine à gaz, ce registre comprenant un châssis (10, 13) définissant un chemin d'écoulement rectangulaire qui s'ouvre à travers le châssis, des lames rectangulaires plates (17) et des moyens d'actionnement de lames tournantes (18, 19, 22, 23, 24), montés dans le châssis pour faire tourner les lames entres des positions qui ouvrent le chemin d'écoulement et des positions qui ferment ce chemin d'écoulement, ces lames (17) ayant un jeu fonctionnel par rapport au châssis (13) et les unes par rapport aux autres, caractérisé par
un renfort (36) pour chaque lame (17) sur la face de cette lame qui est en amont dans la position fermée des lames, chaque renfort (36) comprenant une partie centrale rectangulaire (37) espacée par rapport à la face précitée, et des parties latérales (18) fixées à cette face dans des positions adjacentes à ses bords, un espace libre étant ainsi défini entre le renfort (36) et la lame (17), chacune des parties latérales (38) comportant un ensemble de trous (40) espacés dans leur direction longitudinale, avec la série de trous d'une partie latérale (38) décalée par rapport à la série de trous (40) sur l'autre partie latérale (38), grâce à quoi les gaz d'échappement chauds circulent de façon turbulente à travers les trous (40) du renfort (36) et à travers l'espace libre précité, de façon que la totalité de la face amont soit chauffée simultanément et uniformément, pour éviter une déformation de la lame.

2. Le registre à lames pivotantes de la revendication 1, caractérisé en outre en ce que les moyens d'actionnement de lames comprennent deux tourillons (18, 19) pour chaque lame (17), chaque tourillon ayant des première et seconde extrémités, les premières extrémités étant soudées aux extrémités opposées des lames (17), en alignement avec l'axe central longitudinal de celles-ci, les lames (17) se trouvant à l'intérieur du chemin d'écoulement, l'une au-dessus de l'autre, les secondes extré-mités des tourillons étant supportées de façon tournante par le châssis, avec les axes des lames parallèles et dans le même plan vertical, et caractérisé en outre en ce que les premières extrémités des tourillons (18, 19) de chaque lame (17) sont soudées à la lame à proximité des extrémités de celle-ci, chaque renfort (36) comprenant des goussets d'extrémités (39) perpendiculaires à la face précitée et soudés à celle-ci et aux premières extrémités des tourillons.

3. Le registre à lames pivotantes de la revendication 2, caractérisé en outre en ce que le châssis (10, 13) comprend un cadre de support (10), un cadre intérieur (13), une isolation (12) entre les cadres, un accouplement (14, 14A, 15, 16) entre les cadres et à l'intérieur de l'isolation, cet accouplement étant d'un type qui permet d'absorber des forces de dilatation, le cadre intérieur (13) comportant des sièges de joints d'étanchéité (32, 33)
s'étendant autour du chemin d'écoulement et dans celui-ci, avec des jeux fonctionnels par rapport aux lames (17), des joints d'étanchéité (25) s'étendant autour du bord des lames (17) pour venir en contact avec les sièges (32, 33), l'un des bords des lames, qui sont proches lorsque les lames sont dans leur position fermée, comportant un joint d'étanchéité longitudinal (25) prévu pour venir en contact avec l'autre des bords mentionnés en dernier, ces joints d'étanchéité étant d'un type qui permet d'absorber des forces de dilatation sans déformation des lames.
